# EUROPÄISCHE PATENTSCHRIFT

(11) **EP 4 343 192 B1**
(45) Veröffentlichungstag und Bekanntmachung des Hinweises auf die Patenterteilung: **19.11.2025**
(21) Anmeldenummer: 23183493.8
(22) Anmeldetag: 05.07.2023
(51) Int. Cl.: F16L 27/12

(54) **VERBINDUNGSSYSTEM UND VERBINDUNGSVERFAHREN**
CONNECTION SYSTEM AND CONNECTION METHOD
SYSTÈME ET PROCÉDÉ DE CONNEXION

(30) Priorität: 20.09.2022 DE 102022124148
(43) Veröffentlichungstag der Anmeldung: 27.03.2024
(73) Patentinhaber: Schütz, Lothar, 87737 Boos (DE)
(72) Erfinder: Schütz, Lothar, 87737 Boos (DE)
(74) Vertreter: Patentanwälte Olbricht, Buchhold, Keulertz Partnerschaft mbB

(56) Entgegenhaltungen:
- GB-A- 1 056 585

## Beschreibung

Die vorgestellte Erfindung betrifft ein Verbindungssystem und ein Verbindungsverfahren zum reversiblen fluidleitenden Verbinden von zwei fluidleitenden Elementen gemäßen den beigefügten Ansprüchen.

Zum Verbinden von zwei fluidleitenden Elementen, wie bspw. Rohren, werden in der Regel sogenannte "Pass- und Ausbaustücke" verwendet, die in ihrer Länge mittels einer Vielzahl durchgehender Gewindestangen einstellbar sind. Entsprechend muss bei einem Ein- bzw. Ausbau eines solchen Pass- und Ausbaustücks eine aufwendige Schraubarbeit geleistet werden, bei der die einzelnen Gewindestangen bzw. Gewindemuttern aufeinander abgestimmt angezogen bzw. gelöst werden müssen, so dass mechanische Spannungen im Aufbau minimiert werden.

GB 1 056 585 A1 beschreibt ein System zum Verbinden von Leitungen.

Gemäß einem ersten Aspekt betrifft die vorgestellte Erfindung ein Verbindungssystem zum reversiblen fluidleitenden Verbinden von zwei fluidleitenden Elementen.

Das Verbindungssystem umfasst ein erstes Verbindungsstück zur Anordnung an einem ersten fluidleitenden Element und ein zweites Verbindungsstück zur Anordnung an einem zweiten fluidleitenden Element.

Das erste Verbindungsstück umfasst eine erste Verbindungsschnittstelle und ein Außenrohr.

Das zweite Verbindungsstück umfasst eine zweite Verbindungsschnittstelle und einen Einsatz, wobei der Einsatz eine in dem Außenrohr beweglich angeordnete Buchse und ein sich zwischen der Buchse und der zweiten Verbindungsschnittstelle erstreckendes Innenrohr umfasst, wobei an dem Außenrohr mindestens ein festes Anschlagelement angeordnet ist, wobei an dem Innenrohr mindestens eine feste Führung angeordnet ist, in die mindestens eine Stellschraube eingeschraubt ist, wobei an dem Innenrohr mindestens ein an dem Innenrohr entlang frei beweglich gelagertes Druckelement angeordnet ist und wobei die mindestens eine Stellschraube dazu konfiguriert ist, bei einer Drehung durch die mindestens eine Führung in Richtung des Außenrohrs, das mindestens eine Druckelement auf das mindestens eine Anschlagelement zu drücken und, dadurch bedingt, das Innenrohr von dem Außenrohr weg zu drücken.

Unter einem Einsatz ist im Kontext der vorgestellten Erfindung ein Element zu verstehen, das zum Einsetzen in ein Außenrohr, um dort beweglich gelagert zu werden konfiguriert ist. Ein Einsatz umfasst eine Buchse, die insbesondere vollständig in das Außenrohr einbringbar ist, und ein Innenrohr, das im mit dem Außenrohr gekoppelten Zustand zumindest bereichsweise außerhalb des Außenrohrs verläuft. Die Buchse und das Innenrohr können einstückig oder mehrteilig vorliegen, wobei eine Bewegung des Innenrohrs mit einer Bewegung der Buchse gekoppelt ist. Ein Einsatz ist hohl, so dass ein Fluid durch den Einsatz strömen kann.

Die vorgestellte Erfindung basiert auf dem Prinzip, dass das erste Verbindungsstück und das zweite Verbindungsstück entlang ihrer Längsachse frei zueinander beweglich sind, so dass ein Nutzer bspw. das erste Verbindungsstück relativ zu dem zweiten Verbindungsstück händisch, d.h. ohne Schraubarbeit zu verrichten, verschieben kann, um eine Länge des Verbindungssystems grob einzustellen bzw. zu verstellen.

Entsprechend kann das Verbindungssystem schnell, bspw. mit einer einzelnen Handbewegung in seiner Länge eingestellt werden, um dieses bspw. in einen Spalt einzubringen und schnell, bspw. mit einer einzelnen Handbewegung ausgezogen werden, um den Spalt zu schließen.

Um das Versorgungssystem an jeweiligen zu verbindenden fluidleitenden Elementen anzuordnen bzw. in zumindest eine Richtung starr zu fixieren, ist an dem Außenrohr mindestens ein festes Anschlagelement angeordnet und an dem Innenrohr mindestens eine feste Führung angeordnet. In die mindestens eine Führung ist die mindestens eine Stellschraube eingeschraubt. Eine Einschraubbewegung der Stellschraube weiter in die Führung hinein bzw. durch die Führung hindurch, drückt das beweglich gelagerte Druckelement, das bspw. eine Scheibe, insbesondere aus Metall sein kann, auf das Anschlagelement.

Sobald das Versorgungssystem durch Verschieben des ersten Verbindungselements relativ zu dem zweiten Verbindungselement bzw. durch Einschieben des Einsatzes in das Außenrohr oder durch Ausziehen des Einsatzes aus dem Außenrohr grob in seiner Länge eingestellt ist, kann das Druckelement durch die Stellschraube auf das Anschlagelement gedrückt werden bis dieses das Anschlagelement kontaktiert und, dadurch bedingt, den Einsatz an einer Bewegung weiter in Richtung der ersten Verbindungsschnittstelle hindert. Mit anderen Worten wird eine Verkürzung des Verbindungssystems bzw. eine Reduktion des Verbindungssystems in seiner Länge verhindert, indem die Stellschraube das Druckelement auf das Anschlagelement und, dadurch bedingt, das Innenrohr bzw. die an dem Innenrohr angeordnete Führung von dem Außenrohr weg drückt.

Durch Verbinden, insbesondere Verschrauben der ersten Verbindungsschnittstelle mit einem ersten fluidleitenden Element, wie bspw. einem Rohr oder einer Armatur, wie bspw. einer Pumpe oder einem Stellglied, insbesondere einem Ventil oder Schieber und Verbinden, insbesondere Verschrauben der zweiten Verbindungsschnittstelle mit einem zweiten fluidleitenden Element, kann eine zumindest in eine Richtung starre Verbindung zwischen dem ersten fluidleitenden Element und dem zweiten fluidleitenden Element geschaffen werden.

Es kann vorgesehen sein, dass das Innenrohr bereichsweise in das Außenrohr eingreift.

Je nach Zustand des Verbindungssystems kann das Innenrohr bereichsweise in das Außenrohr eingreifen oder komplett außerhalb des Außenrohrs vorliegen.

Es kann weiterhin vorgesehen sein, dass die mindestens eine Stellschraube lediglich an der mindestens eine Führung und dem mindestens ein Druckelement anliegt.

Durch eine Stellschraube, die lediglich an der mindestens eine Führung und dem mindestens ein Druckelement anliegt, d.h. lediglich in der Führung verschraubt ist, kann eine mechanische Spannung zwischen verschiedenen Verschraubungsstellen vermieden werden. Ferner kann die Stellschraube schnell und einfach, bspw. manuell, bis zum Anschlag in die Führung eingedreht und anschließend festgezogen werden.

Es kann weiterhin vorgesehen sein, dass die Buchse in dem Außenrohr frei beweglich ist, um das Verbindungssystem in seiner Länge zu verändern.

Eine frei bewegliche Buchse, d.h. eine Buchse die manuell bzw. ohne Schraubarbeit in dem Außenrohr beweglich ist, ermöglicht ein schnelles und einfaches Einstellen einer Länge des Verbindungssystems, indem bspw. das Außenrohr von dem Innenrohr weg gezogen wird oder auf das Innenrohr geschoben wird.

Es kann weiterhin vorgesehen sein, dass das Außenrohr an seinem der ersten Verbindungsschnittelle gegenüberliegenden Ende einen sich in Richtung eines Mittelpunkts einer Öffnung des Außenrohrs erstreckenden Fortsatz umfasst, der die Buchse in dem Außenrohr hält.

Ein Fortsatz des Außenrohrs, wie bspw. ein Falz bzw. eine Stufe, verringert einen Innenquerschnitt des Außenrohrs, insbesondere auf einen Außenquerschnitt des Innenrohrs, so dass die Buchse an dem Fortsatz anstößt, wenn diese einen gegenüber dem Innenrohr größeren Außendurchmesser oder Verdickungselements, wie bspw. Dichtungen umfasst.

Es kann weiterhin vorgesehen sein, dass die mindestens eine Stellschraube dazu konfiguriert ist, bei einer Drehung durch die mindestens eine Führung in Richtung des Außenrohrs, die Buchse auf den Fortsatz zu ziehen.

Durch aufeinander abgestimmte Abstände des Anschlagelements der Führung, des Fortsatzes und der Buchse, kann eine durch die Stellschraube bereitgestellte Kraft dazu verwendet werden, die Buchse auf den Fortsatz zu ziehen, so dass ein besonders fluiddichter Übergang des Außenrohrs zu dem Einsatz bereitgestellt wird. Dabei kann an dem Fortsatz und/oder der Buchse eine Dichtung, wie bspw. ein O-Ring angeordnet sein.

Es kann weiterhin vorgesehen sein, dass an einer Außenhülle der Buchse mindestens eine die Buchse radial umschließende Dichtung angeordnet ist.

Eine die Buchse radial umschließende Dichtung, wie bspw. ein O-Ring, bedingt eine besonders fluiddichte Verbindung von Einsatz und Außenrohr, so dass auch bei einer Bewegung des Einsatzes in dem Außenrohr ein Eindringen von Flüssigkeit in einem Zwischenraum zwischen dem Einsatz und dem Außenrohr verhindert und der Einsatz in dem Außenrohr zentriert wird.

Es kann weiterhin vorgesehen sein, dass ein Innendurchmesser des Innenrohrs einem Innendurchmesser der Buchse entspricht.

Identische Innendurchmesser von Innenrohr und Buchse ermöglich einen energetisch effizienten, insbesondere laminaren Strömungsfluss durch das Verbindungssystem.

Es kann weiterhin vorgesehen sein, dass ein Außendurchmesser der Buchse größer ist als ein Außendurchmesser des Innenrohrs.

Ein gegenüber dem Innenrohr größerer Außendurchmesser der Buchse ermöglicht ein Eingreifen eines Fortsatzes des Außenohrs in die Buchse, so dass die Buchse in dem Außenrohr gehalten wird bzw. sich lediglich bis zu einem Maximalanschlag in dem Außenrohr bewegen kann.

Es kann weiterhin vorgesehen sein, dass mindestens eine Sicherungsschraube durch das mindestens ein Druckelement und durch das mindestens ein Anschlagelement verläuft, um das Innenrohr gegen eine Bewegung von dem Außenrohr weg zu sichern.

Eine Sicherungsschraube, die durch das mindestens ein Druckelement und durch das mindestens ein Anschlagelement und optional durch die mindestens eine Führung verläuft, bedingt eine Fixierung des Verbindungssystems in zwei Richtungen, nämlich in Verbindung mit der Stellschraube in eine Komprimierungsrichtung, d.h. in eine Richtung in der eine Länge des Verbindungssystems verkürzt wird und in eine der Komprimierungsrichtung entgegengesetzte Richtung. Entsprechend bedingt eine Sicherungsschraube eine starre Anordnung des Verbindungssystems.

Es kann weiterhin vorgesehen sein, dass die zweite Verbindungsschnittstelle und/oder die erste Verbindungsschnittstelle eine Anzahl Ausnehmungen zum Anordnen von Verbindungselementen und eine Anzahl Gewindebohrungen zum Einschrauben von Gewindeschrauben umfasst.

Ausnehmungen, wie bspw. Langlöcher, ermöglichen ein mechanisches Koppeln bzw. ein Verbinden einer jeweiligen Verbindungsschnittstelle mittels Verbindungsmitteln, wie bspw. Gewindestangen, wohingegen die Gewindebohrungen zum Einschrauben von Gewindeschrauben vorgesehen sind, um mittels der Gewindeschrauben die jeweilige Verbindungsschnittstelle von einem Verbindungspartner weg zu drücken. Entsprechend wird die Gewindeschraube durch die Gewindebohrung auf den Verbindungspartner gedrückt und die Verbindungsschnittstelle durch die Schraubkraft von dem Verbindungspartner gelöst.

Es kann weiterhin vorgesehen sein, dass das erste Verbindungsstück und das zweite Verbindungsstück in einem ausgebauten Zustand des Verbindungssystems relativ zueinander verdrehbar und relativ zueinander verschiebbar sind.

Eine freie Drehbarkeit bzw. Verschiebbarkeit des ersten Verbindungsstücks gegenüber dem zweiten Verbindungsstück, d.h. dass das erste Verbindungsstück insbesondere manuell, ohne Schraubarbeit gegenüber dem zweiten Verbindungsstück gedreht bzw. verschoben werden kann, ermöglicht ein schnelles und einfaches Einstellen und Positionieren des Verbindungssystems.

Gemäß einem zweiten Aspekt betrifft die vorgestellten Erfindung ein Verbindungsverfahren zum reversiblen fluidleitenden Verbinden von zwei fluidleitenden Elementen mittels einer möglichen Ausgestaltung des vorgestellten Verbindungssystems. Das Verbindungsverfahren umfasst das Einschieben des Einsatzes in das Außenrohr, das Anordnen des Verbindungssystems an einer Einbauposition zwischen einem ersten Element und einem zweiten Element, das Verbinden des zweiten Elements mit der zweiten Verbindungsschnittstelle, das Ausziehen des Einsatzes aus dem Außenrohr bis die erste Verbindungsschnittstelle das erste Element kontaktiert, das Verbinden des ersten Elements mit der ersten Verbindungsschnittstelle und das Einschrauben der mindestens einen Stellschraube in Richtung des Außenrohrs bis das mindestens eine Druckelement das mindestens eine Anschlagelement kontaktiert.

Es kann vorgesehen sein, dass das Verbindungsverfahren weiterhin das Einschrauben mindestens einer Sicherungsschraube durch das mindestens ein Druckelement und durch das mindestens ein Anschlagelement umfasst, um das Innenrohr gegen eine Bewegung von dem Außenrohr weg zu sichern.

Es kann weiterhin vorgesehen sein, dass das Verbindungsverfahren das Einschrauben einer Anzahl Schrauben in eine Anzahl Gewindebohrungen in der zweiten Verbindungsschnittstelle umfasst, wobei die Anzahl Schrauben durch die zweite Verbindungsschnittelle hindurch auf das zweite Element geschraubt werden, um das Innenrohr von dem zweiten Element weg in das Außenrohr zu drücken und eine Länge des Verbindungssystems zu reduzieren.

Durch ein Einschrauben von Schrauben in Gegenrichtung zu der Stellschraube kann, wenn die Stellschraube gelockert ist das Verbindungssystem komprimiert, d.h. in seiner Länger reduziert werden, um das Verbindungssystem bspw. einfach aus einem Rohrsystem zu entnehmen.

Es kann vorgesehen sein, dass als die Anzahl Schrauben eine aus dem Verbindungssystem ausgeschraubte Sicherungsschraube und/oder eine aus dem Verbindungssystem ausgeschraubte Stellschraube verwendet wird.

Durch Verwendung von aus dem Verbindungssystem ausgeschraubten Sicherungsschrauben und/oder aus dem Verbindungssystem ausgeschraubten Stellschrauben wird zum einen ein Aufwand durch zusätzliche Schrauben vermieden und zum anderen sichergestellt, dass die Stellschrauben und/oder Sicherungsschrauben gelöst sind und das erste Verbindungsstück gegenüber dem zweiten Verbindungsstück beweglich ist.

Es kann weiterhin vorgesehen sein, dass das erste Element und/oder das zweite Element eine Fluidleitung oder eine Armatur oder eine Fluidfördereinrichtung ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung des vorgestellten Verbindungssystems in einer geschnittenen Ansicht,
- Fig. 2: das Verbindungssystem gemäß Fig. 1 in einer Außenansicht,
- Fig. 3: das Verbindungssystem gemäß Fig. 1 in einer perspektivischen Außenansicht,
- Fig. 4: das Verbindungssystem gemäß Fig. 1 mit einem Sperrelement,
- Fig. 5: das Verbindungssystem gemäß Fig. 1 an einem Schiebeventil,
- Fig. 6: eine weitere mögliche Ausgestaltung des vorgestellten Verbindungssystems,
- Fig. 7: eine mögliche Ausgestaltung des vorgestellten Verbindungsverfahrens.

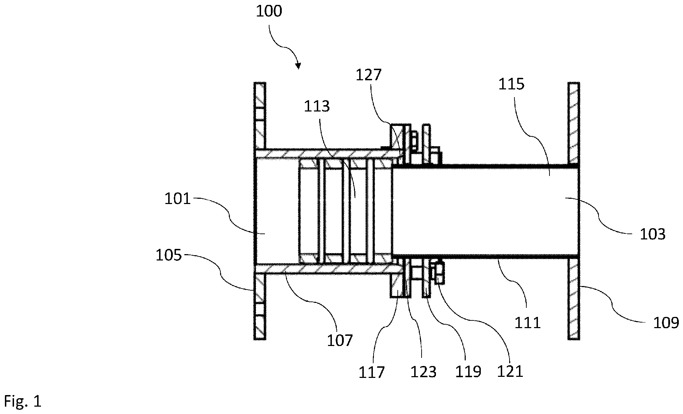

In Fig. 1 ist ein Verbindungssystem 100 dargestellt. Das Verbindungssystem umfasst ein erstes Verbindungsstück 101 zur Anordnung an einem ersten fluidleitenden Element und ein zweites Verbindungsstück 103 zur Anordnung an einem zweiten fluidleitenden Element.

Das erste Verbindungsstück 101 umfasst eine erste Verbindungsschnittstelle 105 und ein Außenrohr 107.

Das zweite Verbindungsstück 103 umfasst eine zweite Verbindungsschnittstelle 109 und einen Einsatz 111, wobei der Einsatz 111 eine in dem Außenrohr 107 beweglich angeordnete Buchse 113 und ein sich zwischen der Buchse 113 und der zweiten Verbindungsschnittstelle 109 erstreckendes Innenrohr 115 umfasst.

An dem Außenrohr 107 ist ein festes Anschlagelement 117 angeordnet.

An dem Innenrohr 115 ist eine feste Führung 119 angeordnet, in die eine Stellschraube 121 eingeschraubt ist.

Ferner ist an dem Innenrohr 115 ein Druckelement 123 frei beweglich gelagert bzw. angeordnet.

Die Stellschraube 121 ist dazu konfiguriert, bei einer Drehung durch die Führung 119 in Richtung des Außenrohrs 107, das Druckelement 123 auf das Anschlagelement 117 zu drücken und, dadurch bedingt, das Innenrohr 115 von dem Außenrohr 107 weg zu drücken. Dies bedeutet, dass eine Schraubbewegung der Stellschraube 121 das Innenrohr gegenüber dem Außenrohr verspannt, so dass sich das Verbindungssystem 100 nicht mehr komprimieren, d.h. in seiner Länge reduzieren kann. Entsprechend stellt die Stellschraube 121 eine Länge des Verbindungssystems 100 ein.

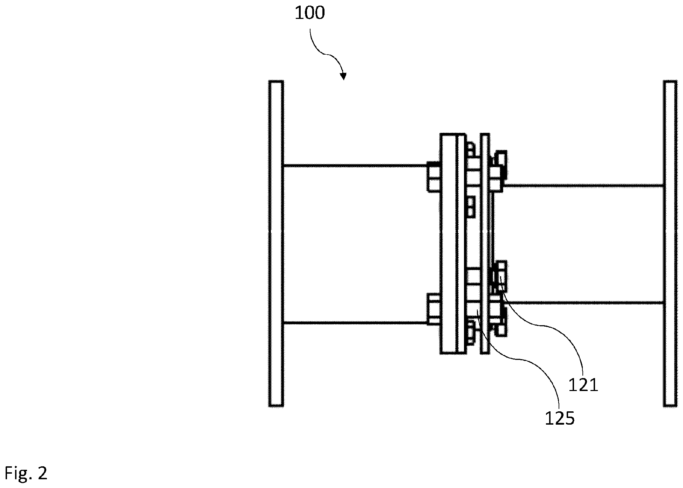

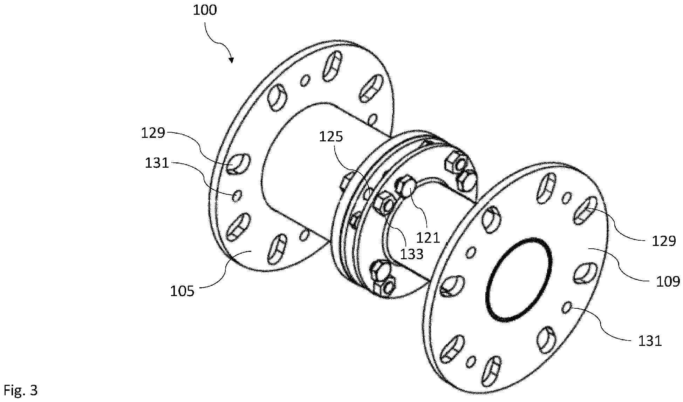

Optional umfasst das Verbindungssystem 100 in Fig. 2 und 3 dargestellte Sicherungsschrauben 125, die zumindest durch das Druckelement 123 und durch das Anschlagelement verlaufen, um das Innenrohr 115 gegen eine Bewegung von dem Außenrohr 107 weg zu sichern, so dass das Verbindungssystem in beiden Bewegungsrichtungen entlang seiner Längsachse unbeweglich bzw. starr ist.

Ferner ist in Fig. 1 ein Fortsatz 127 des Außenrohrs 107 zu sehen, der sich in Richtung eines Zentrums des Außenrohrs 107 erstreckt und, dadurch bedingt, die Buchse 113 in dem Außenrohr 107 sichert bzw. eine maximale Anschlagposition definiert.

Die Buchse 113 ist von drei radialen Dichtungen 129 umgeben, die ein Eindringen von Fluid in einen Zwischenraum zwischen der Buchse 113 und dem Außenrohr 107 verhindern.

In Fig. 2 ist das Verbindungssystem 100 in einer Außenansicht dargestellt. Hier sind Stellschrauben 121 und Sicherungsschrauben 125 erkennbar.

In Fig. 3 ist das Verbindungssystem 100 in einer räumlich perspektivischen Ansicht dargestellt. Hier ist erkennbar, dass die erste Verbindungsschnittstelle 105 und die zweite Verbindungsschnittstelle 109 jeweils Ausnehmungen in Form von Langlöchern 129 und Gewindebohrungen 131 umfassen.

Während die Langlöcher 129 zur Anordnung an einem Verbindungspartner bzw. einem fluidleitenden Element, wie bspw. einem Rohr dienen, indem bspw. Gewindestangen durch die Langlöcher 129 geführt werden, dienen die Gewindebohrungen 131 zum Einschrauben von Gewindeschrauben, um mittels der Gewindeschrauben die jeweilige Verbindungsschnittstelle 105, 109 von ihrem Verbindungspartner weg zu drücken. Entsprechend wird die Gewindeschraube durch die Gewindebohrung 131 auf den Verbindungspartner gedrückt und die Verbindungsschnittstelle 105. 109 durch die Schraubkraft von dem Verbindungspartner gelöst.

Ferner sind in Fig. 3 die Sicherungsschrauben 125 gut zu erkennen, die sich im Gegensatz zu den Stellschrauben 121 auch durch das Anschlagelement 117 erstrecken und mit einer Schraubmutter 133 gesichert sind.

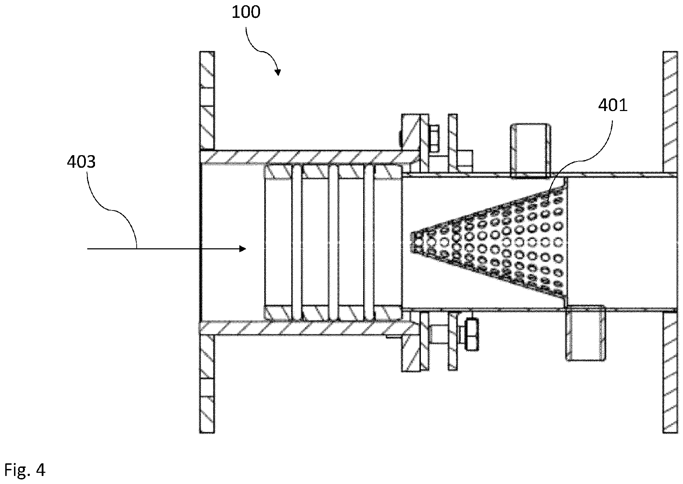

In Fig. 4 ist das Verbindungssystem 100 mit einem Sperrelement 401 dargestellt. Das Sperrelement 401 umfasst ein Porenelement mit einer Anzahl Öffnungen, wie bspw. einen aus einem Lochblech geformten Kegel und ein in dem Porenelement angeordnetes flexibles Dichtungselement. Wenn das Sperrelement 401 in einer Durchlassrichtung angeströmt wird, wie durch Pfeil 403 angedeutet, wird das Dichtungselement von dem Porenelement weg gedrückt, so dass Fluid zwischen dem Porenelement und dem Dichtungselement hindurch und durch das Verbindungssystem 100 fließen kann.

Wenn das Sperrelement 401 jedoch in einer Sperrrichtung, d.h. einer der Durchlassrichtung entgegengesetzten Richtung angeströmt wird, wird das Dichtungselement in das Porenelement gedrückt, so dass das Dichtungselement die Öffnungen des Porenelements abdichtet und ein Durchströmen des Verbindungssystems 100 verhindert. Entsprechend wirkt das Sperrelement 401 als "Fluiddiode".

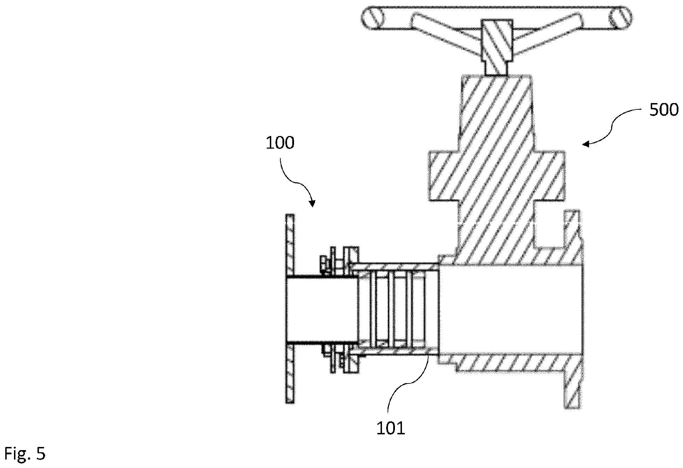

In Fig. 5 ist das Verbindungssystem 100 an einem Verbindungspartner in Form eines Schieberventils 500 angeordnet. Dabei ist das Außenrohr 107 mit dem Schieberventil 400 über die erste Verbindungsschnittstelle 101 verbunden.

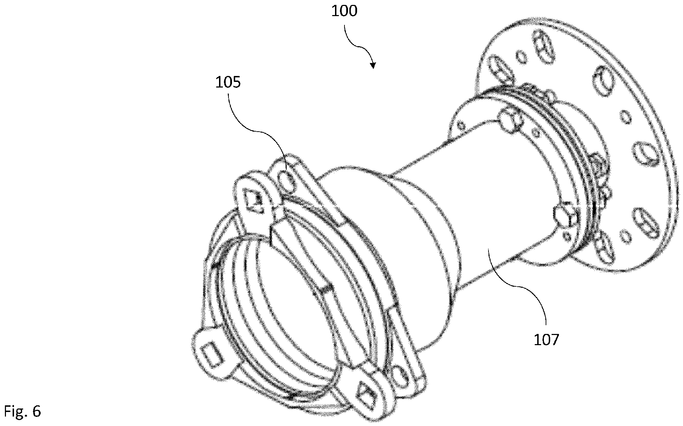

In Fig. 6 ist das Verbindungssystem 100 mit einer ersten Verbindungsschnittstelle 105 in Form einer Mehrpunktverbindungsschnittstelle dargestellt. Ferner ist erkennbar, dass das Außenrohr 107 als Reduzierstück ausgestaltet ist, da sich sein Querschnitt in seinem Verlauf reduziert.

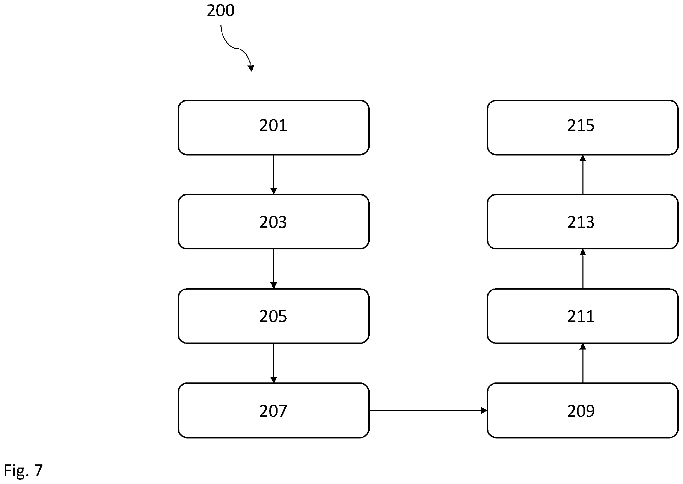

In Fig. 7 ist ein Verbindungsverfahren 200 zum reversiblen fluidleitenden Verbinden von zwei fluidleitenden Elementen mittels bspw. des Verbindungssystems 100 gemäß Fig. 1 dargestellt.

Das Verbindungsverfahren 200 umfasst einen Einschiebeschritt 201, bei dem der Einsatz 111 in das Außenrohr 107 geschoben wird. Der Einschiebeschritt 201 kann bspw. bei einem Hersteller des Verbindungssystems 100 oder an einem Einsatzort durchgeführt werden.

Ferner umfasst das Verbindungsverfahren 200 einen Anordnungsschritt 203, bei dem das Verbindungssystem 100 an einer Einbauposition zwischen einem ersten Element und einem zweiten Element angeordnet wird, einen Verbindungsschritt 205, bei dem das zweite Element mit der zweiten Verbindungsschnittstelle 109 verbunden wird, einen Ausziehschritt 207, bei dem der Einsatz 111 aus dem Außenrohr 107 gezogen bzw. in dem Außenrohr 107 bewegt wird, bis die erste Verbindungsschnittstelle 105 das erste Element kontaktiert.

Weiterhin umfasst das Verbindungsverfahren 200 einen Verbindungsschritt 209, bei dem das erste Element mit der ersten Verbindungsschnittstelle 105 verbunden wird und einen Stellschritt 211, bei dem die Stellschraube 121 in Richtung des Außenrohrs 107 geschraubt wird, bis das Druckelement 123 das Anschlagelement 117 kontaktiert. Optional kann die Stellschraube 121 in einem Anziehschritt 213 mit einem vorgegebenen Drehmoment angezogen werden und/oder eine Sicherungsschraube 125 durch das Anschlagelement 117 und das Druckelement 123 geführt und anschließend festgeschraubt werden.

Zur Demontage des Verbindungssystems 100 kann in einem optionalen Demontageschritt 215 eine Gewindeschraube in Gewindebohrungen der ersten Verbindungsschnittstelle 105 und/oder in Gewindebohrungen 131 der zweiten Verbindungsschnittstelle 109 eingeschraubt wird, um das Verbindungssystem zu komprimieren, d.h. in seiner Länge zu reduzieren bzw. von den fluidleitenden Elementen zu lösen und auszubauen.

### Bezugszeichenliste

| | | | |
|---|---|---|---|
| 100 | Verbindungssystem | 129 | Langloch |
| 101 | erstes Verbindungsstück | 131 | Gewindebohrung |
| 103 | zweites Verbindungsstück | 133 | Schraubmutter |
| 105 | erste Verbindungsschnittstelle | 200 | Verbindungsverfahren |
| 107 | Außenrohr | 201 | Einschiebeschritt |
| 109 | zweite Verbindungsschnittstelle | 203 | Anordnungsschritt |
| 111 | Einsatz | 205 | Verbindungsschritt |
| 113 | Buchse | 207 | Ausziehschritt |
| 115 | Innenrohr | 209 | Verbindungsschritt |
| 117 | Anschlagelement | 211 | Stellschritt |
| 119 | Führung | 213 | Anziehschritt |
| 121 | Stellschraube | 215 | Demontageschritt |
| 123 | Druckelement | 401 | Sperrelement |
| 125 | Sicherungsschraube | 403 | Pfeil |
| 127 | Fortsatz | 500 | Schieberventil |

## Patentansprüche

1. Verbindungssystem (100) zum reversiblen fluidleitenden Verbinden von zwei fluidleitenden Elementen, wobei das Verbindungssystem (100) umfasst:
- ein erstes Verbindungsstück (101) zur Anordnung an einem ersten fluidleitenden Element,
- ein zweites Verbindungsstück (103) zur Anordnung an einem zweiten fluidleitenden Element,
- wobei das erste Verbindungsstück (101) eine erste Verbindungsschnittstelle (105) und ein Außenrohr (107) umfasst,
- wobei das zweite Verbindungsstück (103) eine zweite Verbindungsschnittstelle (109) und einen Einsatz (111) umfasst,
**dadurch gekennzeichnet,**
- **dass** der Einsatz (111) eine in dem Außenrohr (107) beweglich angeordnete Buchse (113) und ein sich zwischen der Buchse (113) und der zweiten Verbindungsschnittstelle (109) erstreckendes Innenrohr (115) umfasst,
- wobei an dem Außenrohr (107) mindestens ein festes Anschlagelement (117) angeordnet ist,
- wobei an dem Innenrohr (115) mindestens eine feste Führung (119) angeordnet ist, in die mindestens eine Stellschraube (121) eingeschraubt ist,
- wobei an dem Innenrohr (115) mindestens ein an dem Innenrohr (115) entlang frei beweglich gelagertes Druckelement (123) angeordnet ist,
- wobei die mindestens eine Stellschraube (121) dazu konfiguriert ist, bei einer Drehung durch die mindestens eine Führung (119) in Richtung des Außenrohrs (107), das mindestens ein Druckelement (123) auf das mindestens ein Anschlagelement (117) zu drücken und, dadurch bedingt, das Innenrohr (115) von dem Außenrohr (107) weg zu drücken, und
- wobei das erste Verbindungsstück (101) und das zweite Verbindungsstück (103) entlang ihrer Längsachse frei zueinander beweglich sind, so dass das erste Verbindungsstück (101) relativ zu dem zweiten Verbindungsstück ohne Schraubarbeit zu verrichten, verschiebbar ist, um eine Länge des Verbindungssystems (100) grob einzustellen.

2. Verbindungssystem (100) nach Anspruch 1,
**dadurch gekennzeichnet,**
**dass** das Innenrohr (115) bereichsweise in das Außenrohr (107) eingreift.

3. Verbindungssystem (100) nach Anspruch 1 oder 2,
**dadurch gekennzeichnet,**
**dass** die mindestens eine Stellschraube (121) lediglich an der mindestens eine Führung (119) und dem mindestens ein Druckelement (123) anliegt.

4. Verbindungssystem (100) nach einem der voranstehenden Ansprüche,
**dadurch gekennzeichnet,**
**dass** die Buchse (113) in dem Außenrohr (107) frei beweglich ist, um das Verbindungssystem (100) in seiner Länge zu verändern.

5. Verbindungssystem (100) nach einem der voranstehenden Ansprüche,
**dadurch gekennzeichnet,**
**dass** das Außenrohr (107) an seinem der ersten Verbindungsschnittelle (105) gegenüberliegenden Ende einen sich in Richtung eines Mittelpunkts einer Öffnung des Außenrohrs (107) erstreckenden Fortsatz (127) umfasst, der die Buchse (113) in dem Außenrohr (107) hält.

6. Verbindungssystem (100) nach Anspruch 5,
**dadurch gekennzeichnet,**
**dass** die mindestens eine Stellschraube (121) dazu konfiguriert ist, bei einer Drehung durch die mindestens eine Führung (119) in Richtung des Außenrohrs (107), die Buchse (113) auf den Fortsatz (127) zu ziehen.

7. Verbindungssystem (100) nach Anspruch 5 oder 6,
**dadurch gekennzeichnet,**
**dass** an dem Fortsatz (127) eine Dichtung angeordnet ist.

8. Verbindungssystem (100) nach einem der Ansprüche 5 bis 7,
**dadurch gekennzeichnet,**
**dass** an der Buchse (113) in einem Kontaktbereich zu dem Fortsatz (127) eine Dichtung angeordnet ist.

9. Verbindungssystem (100) nach einem der voranstehenden Ansprüche,
**dadurch gekennzeichnet,**
**dass** an einer Außenhülle der Buchse (113) mindestens eine die Buchse radial umschließende Dichtung angeordnet ist.

10. Verbindungssystem (100) nach einem der voranstehenden Ansprüche,
**dadurch gekennzeichnet,**
**dass** ein Innendurchmesser des Innenrohrs (115) einem Innendurchmesser der Buchse (113) entspricht.

11. Verbindungssystem (100) nach einem der voranstehenden Ansprüche,
**dadurch gekennzeichnet,**
**dass** ein Außendurchmesser der Buchse (113) größer ist als ein Außendurchmesser des Innenrohrs (115).

12. Verbindungssystem (100) nach einem der voranstehenden Ansprüche,
**dadurch gekennzeichnet,**
**dass** mindestens eine Sicherungsschraube (125) durch das mindestens ein Druckelement (123) und durch das mindestens ein Anschlagelement (117) verläuft, um das Innenrohr (115) gegen eine Bewegung von dem Außenrohr (107) weg zu sichern.

13. Verbindungssystem (100) nach einem der voranstehenden Ansprüche,
**dadurch gekennzeichnet,**
**dass** die zweite Verbindungsschnittstelle (109) eine Anzahl Ausnehmungen (129) zum Anordnen von Verbindungselementen und eine Anzahl Gewindebohrungen (131) zum Einschrauben von Gewindeschrauben umfasst.

14. Verbindungssystem (100) nach einem der voranstehenden Ansprüche,
**dadurch gekennzeichnet,**
**dass** das erste Verbindungsstück (101) und das zweite Verbindungsstück (103) in einem ausgebauten Zustand des Verbindungssystems (100) relativ zueinander verdrehbar und relativ zueinander verschiebbar sind.

15. Verbindungssystem (100) nach einem der voranstehenden Ansprüche,
**dadurch gekennzeichnet,**
**dass** die erste Verbindungsschnittstelle (105) und/oder die zweite Verbindungsschnittstelle (109) eine Anzahl Langlöcher (129) umfassen.

16. Verbindungsverfahren (200) zum reversiblen fluidleitenden Verbinden von zwei fluidleitenden Elementen mittels eines Verbindungssystems (100) nach einem der Ansprüche 1 bis 15, wobei das Verbindungsverfahren (200) umfasst:
- Einschieben (201) des Einsatzes (111) in das Außenrohr (107), **dadurch gekennzeichnet, dass** das Verbindungsverfahren weiterhin umfasst:
- Anordnen (203) des Verbindungssystems (100) an einer Einbauposition zwischen einem ersten Element und einem zweiten Element,
- Verbinden (205) des zweiten Elements mit der zweiten Verbindungsschnittstelle (109),
- Ausziehen (207) des Einsatzes (111) aus dem Außenrohr (107) bis die erste Verbindungsschnittstelle (105) das erste Element kontaktiert,
- Verbinden (209) des ersten Elements mit der ersten Verbindungsschnittstelle (105),
- Einschrauben (211) der mindestens eine Stellschraube (121) in Richtung des Außenrohrs (107) bis das mindestens ein Druckelement (123) das mindestens ein Anschlagelement (117) kontaktiert.

17. Verbindungsverfahren (200) nach Anspruch 16,
**dadurch gekennzeichnet,**
**dass** das Verbindungsverfahren (200) weiterhin umfasst:
Einschrauben (213) mindestens einer Sicherungsschraube (125) durch das mindestens ein Druckelement (123) und durch das mindestens ein Anschlagelement (117), um das Innenrohr (115) gegen eine Bewegung von dem Außenrohr (107) weg zu sichern.

18. Verbindungsverfahren (200) nach Anspruch 16 oder 17,
**dadurch gekennzeichnet,**
**dass** das Verbindungsverfahren (200) weiterhin umfasst:
Einschrauben (215) einer Anzahl Schrauben in eine Anzahl Gewindebohrungen (131) in der zweiten Verbindungsschnittstelle (109), wobei die Anzahl Schrauben durch die zweite Verbindungsschnittelle (109) hindurch auf das zweite Element geschraubt werden, um das Innenrohr (115) von dem zweiten Element weg in das Außenrohr (107) zu drücken und eine Länge des Verbindungssystems (100) zu reduzieren.

19. Verbindungsverfahren (200) nach Anspruch 18,
**dadurch gekennzeichnet,**
**dass** als die Anzahl Schrauben eine aus dem Verbindungssystem (100) ausgeschraubte Sicherungsschraube (125) und/oder eine aus dem Verbindungssystem (100) ausgeschraubte Stellschraube (121) verwendet wird.

20. Verbindungsverfahren (200) nach einem der Ansprüche 16 bis 19,
**dadurch gekennzeichnet,**
**dass** das erste Element und/oder das zweite Element eine Fluidleitung oder eine Armatur oder eine Fluidfördereinrichtung ist.

## Claims

1. A connection system (100) for reversibly connecting two fluid-conducting elements, wherein the connection system (100) comprises: a first connector (101)for arrangement on a first fluid-conducting element, a second connector (103) for arrangement on a second fluid-conducting element, wherein the first connector (101) comprising a first connection interface (105) and an outer tube (107), the second connector (103) comprising a second connection interface (109) and an insert (111), **characterised in that** the insert (111) comprises a bushing (113) movably arranged in the outer tube (107) (113) arranged movably in the outer tube (107) and an inner tube (115) extending between the bushing (113) and the second connection interface (109), wherein at least one fixed stop element (117) is arranged on the outer tube (107), wherein at least one fixed guide (119) is arranged on the inner tube (115) is arranged at least one fixed guide (119) into which at least one adjusting screw (121) is screwed, wherein at least one pressure element (123) mounted so as to be freely movable along the inner tube (115) is arranged on the inner tube (115), wherein the at least one adjusting screw (121) is configured, when rotated by the at least one guide (119) in the direction of the outer tube (107), to press the at least one pressure element (123) towards the at least one stop element (117) and, as a result, to press the inner tube (115) away from the outer tube (107), and wherein the first connecting piece (101) and the second connecting piece (103) are freely movable relative to each other along their longitudinal axis, so that the first connecting piece (101) can be displaced relative to the second connecting piece without performing any screw work in order to roughly adjust a length of the connecting system (100).

2. Connection system (100) according to claim 1, **characterised in that** the inner tube (115) engages with the outer tube (107) in certain areas.

3. Connection system (100) according to claim 1 or 2, **characterised in that** the at least one adjusting screw (121) only bears against the at least one guide (119) and the at least one pressure element (123).

4. Connection system (100) according to one of the preceding claims, **characterised in that** the bushing (113) is freely movable in the outer tube (107) in order to change the length of the connection system (100).

5. Connection system (100) according to one of the preceding claims, **characterised in that** the outer tube (107) comprises, at its end opposite the first connection interface (105), an extension (127) extending towards a centre point of an opening of the outer tube (107), which holds the bushing (113) in the outer tube (107).

6. Connection system (100) according to claim 5, **characterised in that** the at least one adjusting screw (121) is configured to pull the bushing (113) towards the extension (127) when rotated by the at least one guide (119) in the direction of the outer tube (107).

7. Connection system (100) according to claim 5 or 6, **characterised in that** a seal is arranged on the extension (127).

8. Connection system (100) according to one of claims 5 to 7, **characterised in that** a seal is arranged on the bushing (113) in a contact area with the extension (127).

9. Connection system (100) according to one of the preceding claims, **characterised in that** at least one seal radially surrounding the socket is arranged on an outer shell of the socket (113).

10. Connection system (100) according to one of the preceding claims, **characterised in that** an inner diameter of the inner tube (115) corresponds to an inner diameter of the bushing (113).

11. Connection system (100) according to one of the preceding claims, **characterised in that** an outer diameter of the bushing (113) is larger than an outer diameter of the inner tube (115).

12. A connection system (100) according to any of the preceding claims, **characterised in that** at least one locking screw (125) passes through the at least one pressure element (123) and through the at least one stop element (117) to secure the inner tube (115) against movement away from the outer tube (107).

13. Connection system (100) according to one of the preceding claims, **characterised in that** the second connection interface (109) comprises a number of recesses (129) for arranging connecting elements and a number of threaded holes (131) for screwing in threaded screws.

14. Connection system (100) according to one of the preceding claims, **characterised in that** the first connecting piece (101) and the second connecting piece (103) can be rotated relative to each other and can be displaced relative to each other in a disassembled state of the connection system (100).

15. Connection system (100) according to one of the preceding claims, **characterised in that** the first connection interface (105) and/or the second connection interface (109) comprise a number of elongated holes (129).

16. Connection method (200) for reversibly connecting two fluid-conducting elements by means of a connection system (100) according to one of claims 1 to 15, wherein the connection method (200) comprises:
inserting (201) the insert (111) into the outer tube (107), **characterised in that** the connection method further comprises: arranging (203) the connection system (100) at an installation position between a first element and a second element, connecting (205) the second element to the second connection interface (109), pulling (207) the insert (111) out of the outer tube (107) until the first connection interface (105) contacts the first element, connecting (209) the first element to the first connection interface (105) , screwing (211) the at least one adjusting screw (121) in the direction of the outer tube (107) until the at least one pressure element (123) contacts the at least one stop element (117).

17. Connecting method (200) according to claim 16, **characterised in that** the connecting method (200) further comprises: screwing (213) at least one locking screw (125) through the at least one pressure element (123) and through the at least one stop element (117) to secure the inner tube (115) against movement away from the outer tube (107).

18. Connection method (200) according to claim 16 or 17, **characterised in that** the connection method (200) further comprises: screwing (215) a number of screws into a number of threaded holes (131) in the second connection interface (109), wherein the number of screws are screwed through the second connection interface (109) onto the second element to push the inner tube (115) away from the second element into the outer tube (107) and reduce a length of the connection system (100).

19. Connection method (200) according to claim 18, **characterised in that** the number of screws used is a locking screw (125) unscrewed from the connection system (100) and/or an adjusting screw (121) unscrewed from the connection system (100).

20. Connection method (200) according to one of claims 16 to 19, **characterised in that** the first element and/or the second element is a fluid line or a fitting or a fluid delivery device.

## Revendications

1. Système de raccordement (100) pour raccorder de manière réversible deux éléments conducteurs de fluide, le système de raccordement (100) comprenant: un premier raccord (101) destiné à être disposé sur un premier élément conducteur de fluide, un deuxième raccord (103) destiné à être disposé sur un deuxième élément conducteur de fluide, le premier raccord (101) comprenant une première interface de raccordement (105) et un tube extérieur (107), le deuxième raccord (103) comprenant une deuxième interface de raccordement (109) et un insert (111), **caractérisé en ce que** l'insert (111) comprend une douille (113) disposée de manière mobile dans le tube extérieur (107) (113) disposée de manière mobile dans le tube extérieur (107) et un tube intérieur (115) s'étendant entre la douille (113) et la deuxième interface de raccordement (109), au moins un élément de butée fixe (117) étant disposé sur le tube extérieur (107), au moins un guide fixe (119) dans lequel est vissée au moins une vis de réglage (121) étant disposé sur le tube intérieur (115), au moins un élément de guidage (120) étant disposé sur le tube extérieur (107) de manière à ce que le tube intérieur (115) puisse être déplacé (115) est disposé au moins un guide fixe (119) dans lequel est vissée au moins une vis de réglage (121), au moins un élément de pression (123) monté de manière librement mobile le long du tube intérieur (115) étant disposé sur le tube intérieur (115), la au moins une vis de réglage (121) est configurée de manière à pousser, lors d'une rotation à travers le au moins un guide (119) en direction du tube extérieur (107), le au moins un élément de pression (123) vers le au moins un élément de butée (117) et, de ce fait, à éloigner le tube intérieur (115) du tube extérieur (107), et dans lequel le premier élément de raccordement (101) et le deuxième élément de raccordement (103) sont librement mobiles l'un par rapport à l'autre le long de leur axe longitudinal, de sorte que le premier élément de raccordement (101) peut être déplacé par rapport au deuxième élément de raccordement sans effectuer de travail de vissage, afin de régler grossièrement la longueur du système de raccordement (100).

2. Système de raccordement (100) selon la revendication 1, **caractérisé en ce que** le tube intérieur (115) s'engage par endroits dans le tube extérieur (107).

3. Système de raccordement (100) selon la revendication 1 ou 2, **caractérisé en ce que** la au moins une vis de réglage (121) repose uniquement sur le au moins un guide (119) et le au moins un élément de pression (123).

4. Système de raccordement (100) selon l'une des revendications précédentes, **caractérisé en ce que** la douille (113) est librement mobile dans le tube extérieur (107) afin de modifier la longueur du système de raccordement (100).

5. Système de raccordement (100) selon l'une des revendications précédentes, **caractérisé en ce que** le tube extérieur (107) comprend, à son extrémité opposée à la première interface de raccordement (105), un prolongement (127) s'étendant vers le centre d'une ouverture du tube extérieur (107), qui maintient la douille (113) dans le tube extérieur (107).

6. Système de raccordement (100) selon la revendication 5, **caractérisé en ce que** la au moins une vis de réglage (121) est configurée pour tirer la douille (113) vers le prolongement (127) lorsqu'elle est tournée par le au moins un guide (119) en direction du tube extérieur (107).

7. Système de raccordement (100) selon la revendication 5 ou 6, **caractérisé en ce qu'**un joint d'étanchéité est disposé sur le prolongement (127).

8. Système de raccordement (100) selon l'une des revendications 5 à 7, **caractérisé en ce qu'**un joint d'étanchéité est disposé sur la douille (113) dans une zone de contact avec le prolongement (127).

9. Système de raccordement (100) selon l'une des revendications précédentes, **caractérisé en ce qu'**au moins un joint d'étanchéité entourant radialement la douille est disposé sur une enveloppe extérieure de la douille (113).

10. Système de raccordement (100) selon l'une des revendications précédentes, **caractérisé en ce qu'**un diamètre intérieur du tube intérieur (115) correspond à un diamètre intérieur de la douille (113).

11. Système de raccordement (100) selon l'une des revendications précédentes, **caractérisé en ce qu'**un diamètre extérieur de la douille (113) est supérieur à un diamètre extérieur du tube intérieur (115).

12. Système de raccordement (100) selon l'une des revendications précédentes, **caractérisé en ce qu'**au moins une vis de fixation (125) traverse au moins un élément de pression (123) et au moins un élément de butée (117) afin de fixer le tube intérieur (115) et l'empêcher de s'éloigner du tube extérieur (107).

13. Système de raccordement (100) selon l'une des revendications précédentes, **caractérisé en ce que** la deuxième interface de raccordement (109) comprend un certain nombre d'évidements (129) pour disposer des éléments de raccordement et un certain nombre de trous filetés (131) pour visser des vis filetées.

14. Système de raccordement (100) selon l'une des revendications précédentes, **caractérisé en ce que** le premier élément de raccordement (101) et le deuxième élément de raccordement (103) peuvent tourner et se déplacer l'un par rapport à l'autre lorsque le système de raccordement (100) est démonté.

15. Système de raccordement (100) selon l'une des revendications précédentes, **caractérisé en ce que** la première interface de raccordement (105) et/ou la deuxième interface de raccordement (109) comprennent un certain nombre de trous oblongs (129).

16. Procédé de raccordement (200) pour raccorder de manière réversible deux éléments conducteurs de fluide au moyen d'un système de raccordement (100) selon l'une des revendications 1 à 15, le procédé de raccordement (200) comprenant :
l'insertion (201) de l'insert (111) dans le tube extérieur (107), **caractérisé en ce que** le procédé de raccordement comprend en outre : la mise en place (203) du système de raccordement (100) dans une position d'installation entre un premier élément et un deuxième élément, le raccordement (205) du deuxième élément à la deuxième interface de raccordement (109), retrait (207) de l'insert (111) du tube extérieur (107) jusqu'à ce que la première interface de raccordement (105) entre en contact avec le premier élément, raccordement (209) du premier élément à la première interface de raccordement (105) de l' , visser (211) la au moins une vis de réglage (121) en direction du tube extérieur (107) jusqu'à ce que le au moins un élément de pression (123) entre en contact avec le au moins un élément de butée (117).

17. Procédé de raccordement (200) selon la revendication 16, **caractérisé en ce que** le procédé de raccordement (200) comprend en outre : visser (213) au moins une vis de fixation (125) à travers au moins un élément de pression (123) et à travers au moins un élément de butée (117) afin de fixer le tube intérieur (115) et l'empêcher de s'éloigner du tube extérieur (107).

18. Procédé de raccordement (200) selon la revendication 16 ou 17, **caractérisé en ce que** que le procédé de raccordement (200) comprend en outre : le vissage (215) d'une pluralité de vis dans une pluralité de trous filetés (131) dans la deuxième interface d'assemblage (109), la pluralité de vis étant vissées à travers la deuxième interface d'assemblage (109) sur le deuxième élément afin de pousser le tube intérieur (115) hors du deuxième élément dans le tube extérieur (107) et de réduire la longueur du système de raccordement (100).

19. Procédé de raccordement (200) selon la revendication 18, **caractérisé en ce que** le nombre de vis comprend une vis de sécurité (125) dévissée du système de raccordement (100) et/ou une vis de réglage (121) dévissée du système de raccordement (100).

20. Procédé de raccordement (200) selon l'une des revendications 16 à 19, **caractérisé en ce que** le premier élément et/ou le deuxième élément est une conduite de fluide ou une armature ou un dispositif de transport de fluide.
